# EUROPÄISCHE PATENTSCHRIFT

(11) **EP 1 796 936 B1**
(45) Veröffentlichungstag und Bekanntmachung des Hinweises auf die Patenterteilung: **14.09.2011**
(21) Anmeldenummer: 05784180.1
(22) Anmeldetag: 22.08.2005
(51) Int. Cl.: B60N 2/28, B60N 2/48, B60N 2/22

(54) **KINDERSCHUTZSYSTEM FÜR KRAFTFAHRZEUGE**
CHILD PROTECTION SYSTEM FOR MOTOR VEHICLES
SYSTEME DE PROTECTION D'ENFANT POUR VEHICULES AUTOMOBILES

(30) Priorität: 08.10.2004 DE 102004049754
(43) Veröffentlichungstag der Anmeldung: 20.06.2007
(73) Patentinhaber: Takata-Petri AG, 63743 Aschaffenburg (DE)
(72) Erfinder: NETT, Reiner, 63739 Aschaffenburg (DE); BOLL, Rüdiger, 63856 Bessenbach (DE)
(74) Vertreter: Baumgärtel, Gunnar
(86) Internationale Anmeldenummer: PCT/DE2005/001495
(87) Internationale Veröffentlichungsnummer: WO 2006/039877

(56) Entgegenhaltungen:
- EP-A- 0 287 259
- EP-A- 1 084 900
- FR-A- 2 787 977
- FR-A- 2 794 409
- US-A1- 2002 145 318
- US-B1- 6 464 294

## Beschreibung

Die Erfindung betrifft ein Kinderschutzsystem für ein Kraftfahrzeug nach dem Oberbegriff des Anspruchs 1 (Siehe z.B. US 6464 294 B1).

Ein derartiges Kinderschutzsystem dient zur Anordnung an einem Kraftfahrzeugsitz und umfasst eine entlang einer Lehnenlängsrichtung erstreckte Rückenlehne mit einer an einer Sitzschale angeordneten Rückenstütze zum rückseitigen Abstütze des Torsos eines Kindes und mit einer an der Rückenstütze in Lehnenlängsrichtung beweglich gelagerten Kopfstützenbaugruppe zum rückseitigen und/oder seitlichen Abstützen des Kopfes eines Kindes, wobei die Kopfstützenbaugruppe weiterhin zwei seitliche Schulterschutzwangen (Seitenwangen) aufweist, die quer zur Lehnenlängsrichtung voneinander beabstandet von jeweils einem seitlichen Stützabschnitt der Kopfstützenbaugruppe abstehen. Zu Einstellung einerseits der Lage der Kopfstützenbaugruppe bezüglich der Rückenstütze in Lehnenlängsrichtung und andererseits des Abstandes der beiden seitlichen Schulterschutzwangen quer zur Lehnenlängsrichtung sind diesem Kinderschutzsystem ein erster und zweiter Einstellmechanismus zugeordnet.

Ein derartiges Kinderschutzsystem dient zur Aufnahme in einem Kraftfahrzeug mitreisender Kinder und wird hierzu in geeigneter Weise an einem Kraftfahrzeugsitz befestigt. Die Rückenstütze des Kinderschutzsystems dient dabei zur Stabilisierung des Rückens eines Kindes und erstreckt sich hierzu in Lehneniängsrichtung entiang der Wirbelsäule eines in Normalposition in dem Kinderschutzsystem befindlichen Kindes. Die in Lehnenlängsrichtung verschieblich an der Rückenstütze angeordnete Kopfstützenbaugruppe dient vorliegend nicht nur zum Abstützen des Kopfes eines Kindes, sondern weist zusätzlich auch seitliche Schulterschutzwangen auf, die insbesondere bei einem Seiten-Crash eine seitliche Abstützung des Oberkörpers, nämlich der Schultern und ggf. Oberarme, eines Kindes gewährleisten sollen.

Damit ein derartiges Kinderschutzsystem einem jeweiligen Kind bestmöglichen Komfort und insbesondere bestmögliche Sicherheit in einem Crash-Fall bietet, ist es erforderlich, dass sowohl die Kopfstützenhöhe, also die Lage der Kopfstützenbaugruppe bezüglich der Rückenstütze in Lehnenlängsrichtung, als auch die Kopfstützenbreite, nämlich der Abstand der beiden seitlichen Schulterschutzwangen (Seitenwangenabstand) quer zur Lehnenlängsrichtung, an die Größe und allgemein an die antropometrischen Gegebenheiten des jeweiligen kindlichen Körpers angepasst werden. Hierzu dienen die Mechanismen zur Einstellung der Lage der Kopfstützenbaugruppe in Lehnenlängsrichtung einerseits sowie zur Einstellung des Abstandes zwischen den beiden seitlichen Schulterschutzwangen andererseits.

Bei bekannten Kinderschutzsystemen dieser Art besteht jedoch das Problem, dass das Erfordernis der separaten Betätigung zweier unterschiedlicher Einstellmechanismen zur Einstellung der Kopfstützenhöhe (Lehnenlänge) einerseits und des Seitenwangenabstandes (Lehnenbreite) andererseits mit einigem Aufwand verbunden ist. Dies erhöht das Risiko von Fehlbedienungen und kann auch dazu führen, dass eine regelmäßige Anpassung der Einstellungen an die sich mit dem Alter eines Kindes ändernden anthropometrischen Gegebenheiten unterbleibt.

In den Druckschriften US 6 464 294 B1, US 2002/1455318 A1 und FR 2 787 977 A wird jeweils ein Kinderschutzsystem zur Anordnung an einem Kraftfahrzeugsitz beschrieben.

Der Erfindung liegt das Problem zugrunde, ein Kinderschutzsystem der eingangs genannten Art zu schaffen, das sich durch eine komfortable und sichere Bedienbarkeit auszeichnet.

Dieses Problem wird erfindungsgemäß durch die Schaffung eines Kinderschutzsystems mit den Merkmalen des Anspruchs 1 gelöst.

Danach umfasst das Kinderschutzsystem einen Koppelmechanismus, mittels dem die beiden Einstellmechanismen des Kinderschutzsystems derart miteinander gekoppelt sind, dass bei Betätigung eines Einstellmechanismus zur Einstellung der zugeordneten Stellgröße (Kopfstützenhöhe oder Seitenwangenabstand) auch der andere Einstellmechanismus ausgelöst wird. Der Abstand zwischen den beiden quer zur Lehnenlängsrichtung voneinander beabstandeten Schulterschutzwangen des Kinderschutzsystems, also die Lehnenbreite, ist durch Verschwenken der beiden seitlichen Stützabschnitte um eine definierte Schwenkachse einstellbar.

Dies führt zu einer Erhöhung des Bedienkomforts, da beide Einstellmechanismen in einem Betätigungsschritt, z. B. durch einhändige Betätigung eines zugeordneten Betätigungsgriffes, bedient werden können. Dies reduziert gleichzeitig auch das Risiko einer Fehlbedienung, da alle Einstellvorgänge mit ein und demselben Betätigungselement erfolgen können.

Der erfindungsgemäß vorgesehene Koppelmechanismus ist insbesondere so ausgeführt, dass bei Betätigung des ersten Einstellmechanismus (zur Einstellung der Kopfstützenhöhe) der zweite Einstellmechanismus (zur Einstellung des Seitenwangenabstandes) ausgelöst wird.

Hierzu weist der Koppelmechanismus ein Getriebe zur Umsetzung einer Bewegung entlang einer ersten Richtung in eine Bewegung mit einer Komponente senkrecht zu jener ersten Richtung auf, also etwa ein Getriebe zur Umsetzung einer Bewegung in Lehnenlängsrichtung (bei der Einstellung der Kopfstützenhöhe) in eine Bewegung mit einer Komponente senkrecht zur Lehnenlängsrichtung (zur Einstellung des Abstandes zwischen den beiden Schulterschutzwangen) oder umgekehrt. Hierfür eignen sich beispielsweise Zahnradgetriebe, Spindelgetriebe, Hebelgetriebe, Zugmittelgetriebe, Kulissen- bzw. Gleitführungen oder miteinander zusammenwirkende Gleitkeile.

Gemäß einer Ausführungsform der Erfindung dient das Getriebe zur Umsetzung einer Längsbewegung in eine Drehbewegung oder umgekehrt, beispielsweise mittels einer Zahnstange und eines zugeordneten, hiermit kämmenden Zahnrades, mittels einer Schraube (Spindel) und einer hierauf gelagerten Mutter (Spindelmutter), mittels eines flexiblen Zugmittels (Seil) und einer zugeordneten, durch das Zugmittel drehbaren Rolle oder mittels eines Kurbelgetriebes.

Nach einer anderen Ausführungsform der Erfindung dient das Getriebe zur Umsetzung einer Längsbewegung entlang einer ersten Richtung in eine Längsbewegung entlang einer zweiten Richtung, z. B. mittels eines Hebelgetriebes, mittels eines in einer zugeordneten Führungsbahn (z. B. in Form einer Führungskulisse) geführten Führungselementes (z. B. in Form eines Führungszapfens) oder mittels zusammenwirkender Gleitkeile.

Zur Betätigung der beiden über den Koppelmechanismus miteinander gekoppelten Einstellmechanismen dient bevorzugt ein Betätigungselement (Betätigungsgriff) in Form eines Betätigungshebels, der in einer zugeordneten Griffmulde angeordnet ist.

Ferner ist in einer bevorzugten Weiterbildung der Erfindung ein Verriegelungsmechanismus vorgesehen, um eine aktuell eingestellte Kopfstützenhöhe sowie einen aktuell eingestellten Seitenwangenabstand zu arretieren. Hierzu eignet sich beispielsweise ein Rastmechanismus, der elastisch (durch Federmittel) in Richtung auf den verriegelten Zustand vorgespannt ist und der durch ein zugeordnetes Bedienelement gelöst werden kann. Bevorzugt wird dieses Bedienelement durch das Betätigungselement gebildet, das zur Neueinstellung der Kopfstützenhöhe sowie des Seitenwangenabstandes dient. Hierzu ist das Betätigungselement beweglich gelagert, also etwa in Form eines schwenkbar gelagerten Betätigungshebels, so dass durch Einwirkung auf das Betätigungselement, also etwa durch Verschwenken eines Betätigungshebels, zunächst der Verriegelungsmechanismus gelöst werden kann und dann durch weitere Einwirkung auf das Betätigungselement, etwa durch Ziehen mit Krafteinwirkung in Lehnenlängsrichtung, der eine Einstellmechanismus, also vorliegend der Einstellmechanismus zur Einstellung der Länge der Rückenlehne, betätigt wird. Erfindungsgemäß wird hierdurch gleichzeitig auch der andere Einstellmechanismus ausgelöst, also vorliegend der Abstand zwischen den beiden seitlichen Stützen der Rückenlehne verstellt.

Mit Vorteil ist weiterhin eine Anzeigeeinrichtung zur Anzeige der Einstellung mindestens eines der Einstellmechanismen vorgesehen, die durch eine Skala und einen zugeordneten Zeiger gebildet sein kann, welche an jeweils einem von zwei zueinander verstellbaren Teilen des Kinderschutzsystems angebracht sind, z.B. an jeweils einem von zwei zueinander teleskopierbaren Lehnenteilen (Rückenstütze einerseits und Kopfstützenbaugruppe andererseits) der Rückenlehne. Der Zeiger kann hierbei als ein Anzeigefenster in Form eines Sichtfensters ausgebildet sein, hinter dem jeweils ein Teil der Skala sichtbar ist.

Zweckmäßig ist an der Kopfstützenbaugruppe des Kinderschutzsystems mindestens eine zur Führung eines Sicherheitsgurtes dienende Gurtführung derart angeordnet, dass deren Position bei einer Neueinstellung der Kopfstützenhöhe und des Seitenwangenabstandes gleichzeitig in entsprechender Weise verstellt wird. Hierdurch ist die Lage der Gurtführung des Kinderschutzsystems jeweils automatisch an die aktuelle Einstellung der Kopfstützenhöhe und des Seitenwangenabstandes angepasst. Besonders bevorzugt ist dabei die Anordnung jeweils einer Gurtführung an jedem der beiden seitlichen Abschnitte der Rückenlehne.

Weitere Einzelheiten und Vorteile der Erfindung werden bei der nachfolgenden Beschreibung eines Ausführungsbeispieles anhand der Figuren deutlich werden.

Es zeigen:
- Figur 1: ein Kinderschutzsystem mit einer höhenverstellbaren Kopfstützenbaugruppe und in ihrem Abstand zueinander verstellbaren seitlichen Schulterschutzwangen;
- Figur 2: ein Kinderschutzsystem gemäß Figur 1 mi⁺ anderer Einstellung der Kopfstützenhöhe sowie des Abstandes zwischen den beiden seitlichen Schulterschutzwangen;
- Figur 3: eine konkrete Ausbildung des in den Figuren 1 und 2 schematisch gezeigten Kinderschutzsystems;
- Figur 4: eine Explosionsdarstellung des Kinderschutzsystems aus Figur 3.

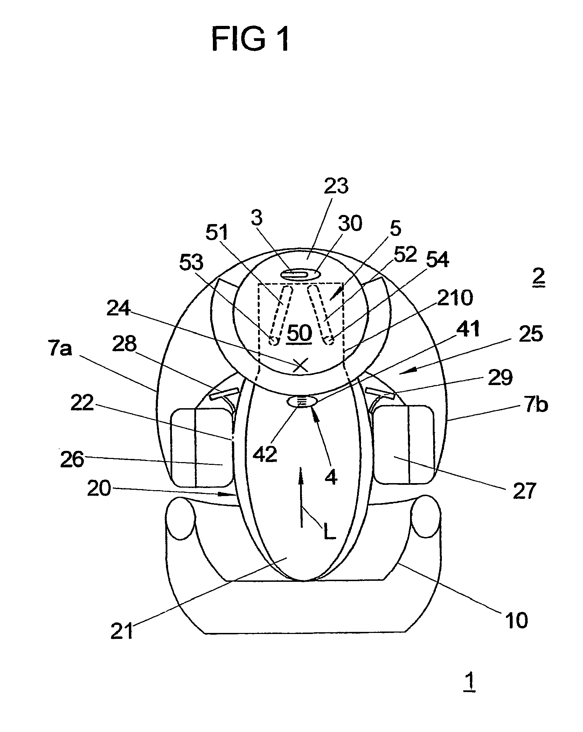

In Figur 1 ist schematisch ein Kinderschutzsystem in Form eines Kindersitzes dargestellt, das eine Sitzschale 1 mit einer Mulde 10 sowie eine hiervon nach oben abstehende Rückenlehne 2 aufweist.

Die Sitzschale 1 mit der Sitzmulde 10 bildet eine Aufnahme für Oberschenkel, Gesäß und Becken eines Kindes und die Rückenlehne 2 dient einerseits zum Abstützen des Rückens eines Kindes mittels einer Rückenstütze 21 sowie andererseits zum Abstützen des Kopfes eines Kindes mittels einer Kopfstützenbaugruppe 22, wobei von der Kopfstützenbaugruppe 22 außerdem seitliche Schulterschutzwangen 26, 27 (Seitenwangen) abstehen, die zum seitlichen Abstützen eines Kindes im Bereich der Oberarme und Schultern, insbesondere bei einem Seiten-Crash dienen und die hierzu quer zur Lehnenlängsrichtung L voneinander beabstandet von jeweils einem schwenkbar an der Kopfstützenbaugruppe 22 angeordneten seitlichen Stützabschnitt 7a, 7b abstehen. Unter der Lehnenlängsrichtung L wird dabei vorliegend diejenige Richtung verstanden, entlang der sich die Wirbelsäule eines in Normalposition in der Sitzschale 1 befindenden Kindes erstreckt. Die Kopfstützenbaugruppe 22 wird nachfolgend auch einfach als Kopfstütze bezeichnet, obwohl sie zusätzliche Baugruppen 26, 27, 28, 29 verglichen mit üblichen Kopfstützen aufweist.

Das in Figur 1 dargestellte Kinderschutzsystem in Form eines Kindersitzes ist in seinen geometrischen Abmessungen an die anthropometrischen Gegebenheiten eines kindlichen Körpers anpassbar, um bestmöglichen Komfort und größtmögliche Sicherheit für ein das Kinderschutzsystem nutzendes Kind zu gewährleisten. Hierzu lassen sich sowohl die Kopfstützenhöhe, also die Lage der Kopfstütze 22 bezüglich der Rückenstütze 21 in Lehnenlängsrichtung L, als auch der Abstand der seitlichen Schulterschutzwangen 26, 27 (Seitenwangen) entlang einer Richtung Q quer zur Lehnenlängsrichtung L, einstellen.

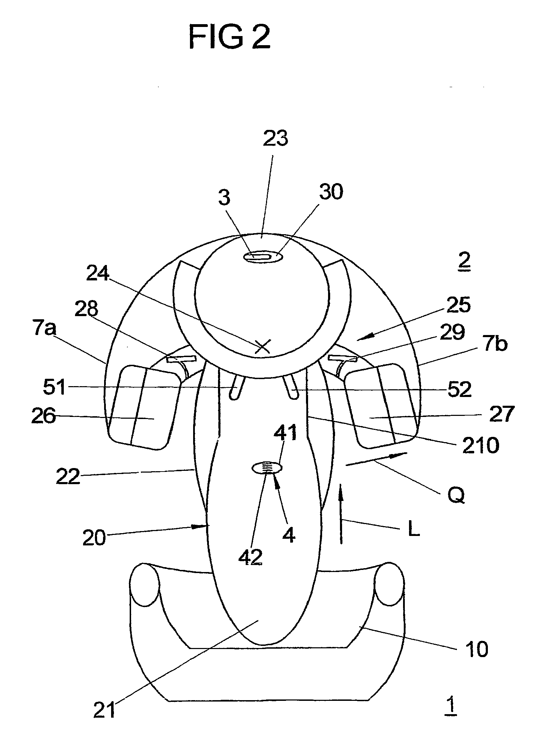

Zur Einstellung der Kopfstützenhöhe ist die Rückenlehne 2 insgesamt teleskopierbar ausgebildet und besteht aus zwei in Lehnenlängsrichtung L zueinander verstellbaren Lehnenteilen 21, 22, von denen das eine, untere Lehnenteil 21 die Rückenstütze bildet und das andere, hierzu in Lehnenlängsrichtung L verschiebbare obere Lehnenteil 22 die Kopfstütze bildet. Zur Einstellung der Lehnenlänge dient ein in einer Griffmulde 30 angeordneter Betätigungsgriff 3 in Form eines Betätigungshebels, der an einer an der Kopfstützenbaugruppe 22 vorgesehenen Kopfaufnahme 23 (zur Aufnahme des Kopfes eines Kindes) angeordnet ist und der eine Doppelfunktion übernimmt:
- Zum einen lässt sich durch Verschwenken des Betätigungshebels 3 ein durch elastisch in ihren verriegelten Zustand vorgespannte Rastelemente gebildeter Verriegelungsmechanismus lösen, mit dem die jeweils aktuelle Einstellung der Lehnenlänge verriegelt ist. Hierdurch wird überhaupt erst eine Neueinstellung der Kopfstützenhöhe durch Verschiebung der Kopfstütze 22 bezüglich der Rückenstütze 21 in Lehnenlängsrichtung L ermöglicht.
- Zum anderen kann nach dem Lösen des Verriegelungsmechanismus durch Ausübung einer in Lehnenlängsrichtung L wirkenden Zugkraft auf den Betätigungsgriff 3, eine gewünschte Neueinstellung der Kopfstützenhöhe vorgenommen werden, wobei die beiden den entsprechenden Einstellmechanismus bildenden Lehnenteile 21, 22, nämlich die Rückenstütze 21 und die beweglich hieran gelagerte Kopfstütze 22, in Lehnenlängsrichtung L zueinander verschoben werden, vgl. Figur 2.

Dem Einstellmechanismus 20 zur Einstellung der Lehnenlänge L, realisiert durch die Telekopierbarkeit der beiden Lehnenteile 21, 22, ist eine Anzeigeeinrichtung 4 zugeordnet, die ein am ersten, unteren Lehnenteil, nämlich der Rückenstütze 21, vorgesehenes Anzeige- bzw. Sichtfenster 41 und eine am anderen, oberen Lehnenteil, nämlich an der Kopfstütze 22, vorgesehene Skala 42 umfasst. Entsprechend der Relativposition der beiden Lehnenteile 21, 22 zueinander in Lehnenlängsrichtung L ist durch das Sichtfenster 41 jeweils ein bestimmter Ausschnitt der Skala 42 sichtbar, an dem sich die aktuelle Einstellung der Kopfstützenhöhe ablesen lässt. Die Skala muss dabei nicht unbedingt die aktuelle Gesamtlänge der Rückenlehne 2, bestehend aus Rückenstütze 21 und Kopfstütze 22, angeben, sondern kann für eine einfachere Bedienbarkeit auch die Körpergröße eines Kindes (in cm) angeben, für die die jeweilige Einstellung der Lehnenlänge geeignet ist. Diese Anzeigeeinrichtung 4 führt zu einer weiteren Reduzierung der Gefahr von Fehlbedienungen, da die Bedienperson unmittelbar über die gewählte Einstellung informiert wird.

Weiterhin weist das in Figur 1 dargestellte Kinderschutzsystem einen Einstellmechanismus 25 zur Einstellung des Abstandes der beiden seitlichen Schulterschutzwangen 26, 27 (Seitenwangen) quer zur Sitzlängsrichtung L auf. Hierzu sind die beiden seitlichen Stützabschnitte 7a, 7b der Rückenlehne 2 um eine Achse 24 verschwenkbar gelagert, so dass durch gegenseitiges Verschwenken der beiden seitlichen Stützabschnitte 7a, 7b der Rückenlehne 2 um die gemeinsame Lagerachse 24 der Abstand der hieran angeordneten seitlichen Schulterschutzwangen 26, 27 in einer Richtung Q quer zur Lehnenlängsrichtung L erhöht oder reduziert wird, vgl. Figur 2.

Die Kopplung der beiden Einstellmechanismen 20, 25 über einen Koppelmechanismus ist dabei derart, dass bei einer Zunahme der Kopfstützenhöhe (in Lehnenlängsrichtung L) auch der Abstand zwischen den beiden seitlichen Schulterschutzwangen 26, 27 (in einer Querrichtung Q quer zur Lehnenlängsrichtung L) zunimmt, vergl. Fig. 2 da ein größeres Kind in der Regel auch einen größeren Platzbedarf quer zur Lehnenlängsrichtung L hat.

Zur Umsetzung einer Längsbewegung der beiden Lehnenteile 21, 22 zueinander während einer Einstellung der Kopfstützenhöhe entlang der Lehnenlängsrichtung L in eine Drehbewegung der beiden seitlichen Stützabschnitte 7a, 7b der Kopfstütze 22 um eine gemeinsame Lagerachse 24 können bekannte Getriebemechanismen, wie z. B. ein Zahnradgetriebe mit Zahnstange und einem hierin eingreifenden Zahnrad, ein Schrauben- bzw. Spindelgetriebe, ein Zugmittelgetriebe mit einem Zugmittel und einer hiervon angetriebenen Seilrolle oder ein Hebelgetriebe eingesetzt werden.

Vorliegend wird als Koppelmechanismus 5 zur Umsetzung einer Längsbewegung der beiden Lehnenteile 21, 22 zueinander in eine gegenläufige Drehbewegung der beiden seitlichen Stützabschnitte 7a, 7b der Rückenlehne 2 ein Koppelgetriebe 50 verwendet, das zwei Kulissenführungen 51, 53 und 52, 54 aufweist. Diese bestehen jeweils aus einer schräg zur Lehnenlängsrichtung L verlaufenden, d. h. zu dieser geneigten Führungskulisse 51, 52 in Form eines Langloches und aus einem hierin geführten Führungszapfen 53 bzw. 54 in Form eines Stiftes bzw. Bolzens. Die beiden Führungskulissen 51, 52 sind dabei in entgegengesetzter Richtung zur Lehnenlängsrichtung L geneigt und die zugeordneten Führungszapfen 53, 54 greifen jeweils formschlüssig in die zugeordnete Führungskulisse 51 bzw. 52 ein.

Die beiden geneigt verlaufenden Führungskulissen 51, 52 sind an einem oberen Stützabschnitt (Fortsatz) 210 der unteren, nicht verschiebbaren Rückenstütze 21 ausgebildet und die zugeordneten Führungszapfen 53, 54 sind an jeweils einem der beiden schwenkbar gelagerten seitlichen Stützabschnitte 7a, 7b der Rückenlehne 2 vorgesehen. Somit sind die Führungskulissen 51, 52 an einer Baugruppe (Rückenstütze 21) ausgebildet, die bei einer Einstellung der Lehnenlänge in Lehnenlängsrichtung L ortsfest bleibt, während die zugeordneten Führungszapfen 53, 54 an einer Baugruppe (nämlich an der Kopfstütze 22, von deren Stützabschnitten 7a, 7b die seitlichen Schulterschutzwangen 26, 27 abstehen) vorgesehen sind, die bei einer Einstellung der Lehnenlänge in Lehnenlängsrichtung L bewegt wird.

Aufgrund des geneigten Verlaufs der Führungskulissen 51, 52 bezüglich der Lehnenlängsrichtung L wird hierbei die Bewegung der Kopfstütze 22 in Lehnenlängsrichtung L umgesetzt in eine Bewegung der beiden seitlichen Stützabschnitte 7a, 7b der Kopfstütze 22 mit einer Komponente Q quer zur Lehnenlängsrichtung. Hierbei handelt es sich wegen der drehbaren Lagerung der beiden seitlichen Stützabschnitte 7a, 7b bezüglich einer Lagerachse 24 um jeweils eine Schwenkbewegung.

Die Schwenkbewegungen der beiden seitlichen Stützabschnitte 7a, 7b der Rückenlehne 2 verlaufen dabei in entgegengesetzter Richtung, entsprechend der entgegengesetzten Neigung der beiden Führungskulissen 51, 52, die jeweils einem der beiden seitlichen Stützabschnitte 7a bzw. 7b zugeordnet sind, wobei diese Zuordnung festgelegt ist durch den Eingriff der beiden an je einem seitlichen Stützabschnitt 7a, 7b vorgesehenen Führungszapfen 53, 54 in je eine der beiden Führungskulissen 51, 52.

Alternativ zu dem vorliegend konkret beschriebenen Koppelmechanismus kann auch einer der weiter oben erwähnten anderen Koppelmechanismen verwendet werden. Von Bedeutung ist lediglich, dass die beiden Einstellmechanismen 20, 25 über den hierfür vorgesehenen Koppelmechanismus derart miteinander gekoppelt sind, dass eine bestimmte Einstellung der Kopfstützenhöhe bzw. Lehnenlänge (in Lehnenlängsrichtung L) mit einer Einstellung der Lehnenbreite (Abstand der seitlichen Schulterschutzwangen 26, 27 in Querrichtung Q) korrespondiert, die dem bei Kindern üblichen Verhältnis von Körpergröße und Schulterbreite entspricht.

Anhand der Figuren 1 und 2 ist ferner erkennbar, dass an den beiden gemeinsam mit der Kopfstütze 22 in Lehnenlängsrichtung L bewegbaren und zudem in ihrem Abstand in einer Richtung Q quer zur Lehnenlängsrichtung L einstellbaren seitlichen Abschnitten 7a, 7b der Rückenlehne 2 jeweils eine Gurtführung 28 bzw. 29 für einen Sicherheitsgurt vorgesehen ist. Hierdurch kann ein Sicherheitsgurt - je nach Einbaulage des Kinderschutzsystems, etwa hinter dem Fahrer-Sitz oder hinter dem Beifahrer-Sitz - durch die eine oder andere Gurtführung 28, 29 hindurch so geführt werden, dass er einen optimalen Schutz für ein im Kinderschutzsystem befindliches Kind bietet.

Durch die Anordnung der Gurtführungen 28, 29 an den mit der Kopfstütze 22 verbundenen und zueinander verschwenkbaren seitlichen Abschnitten 7a, 7b der Rückenlehne 2 wird bei einer Neueinstellung der Lehnenlänge und Lehnenbreite gleichzeitig auch in entsprechender Weise die Lage der Gurtführungen 28, 29 verstellt. Hierdurch ist deren Lage immer optimal an die jeweils gewählte Einstellung der Lehnenlänge und Lehnenbreite, welche wiederum von der Körpergröße des aufzunehmenden Kindes abhängt, abgestimmt.

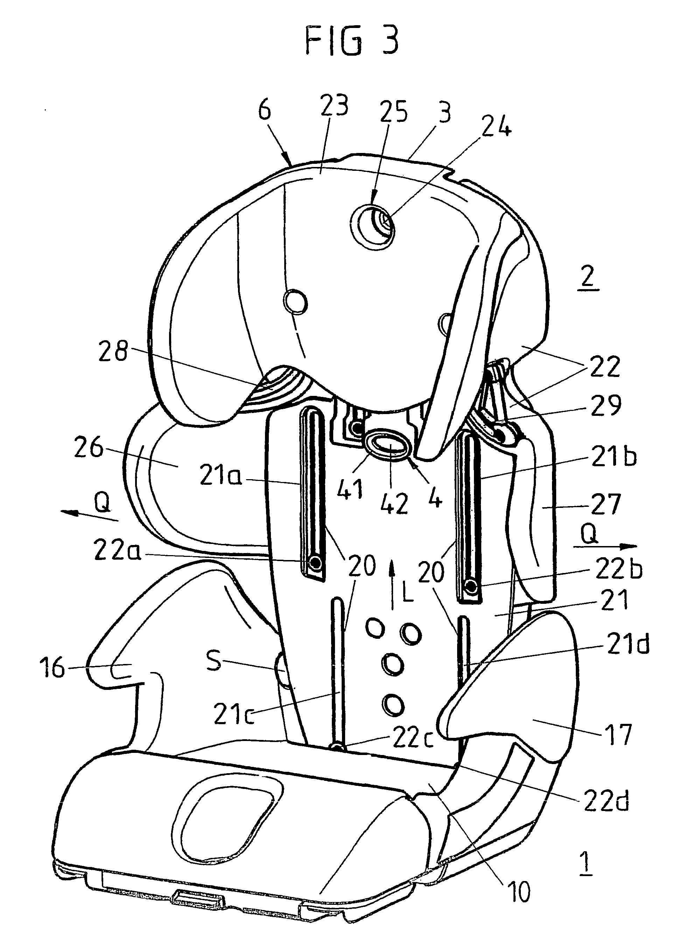

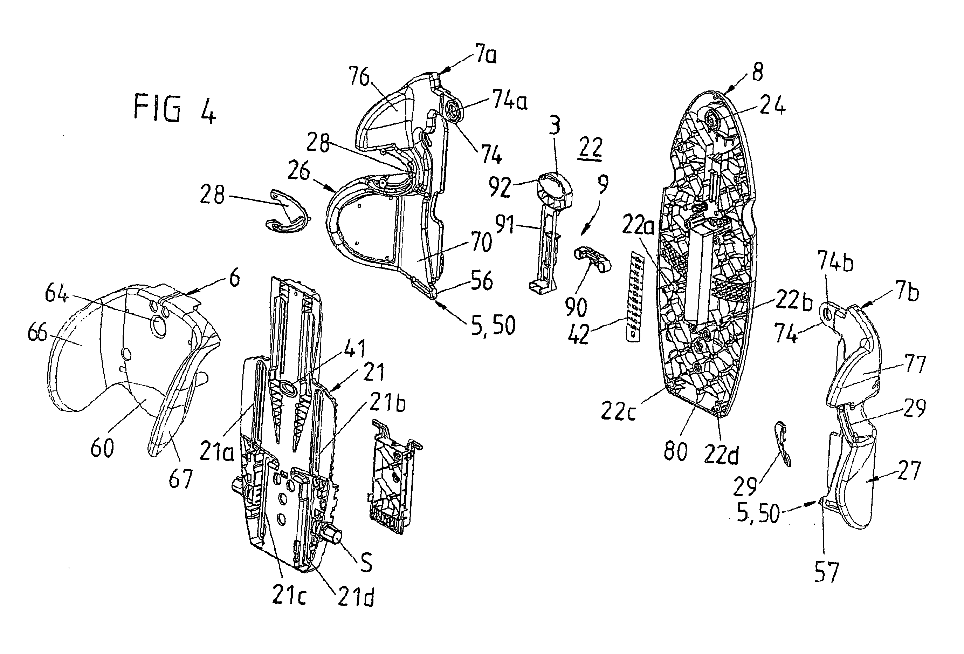

In den Figuren 3 und 4 ist beispielhaft eine konkrete Ausgestaltung und teilweise Abwandlung des in den Figuren 1 und 2 nur schematisch gezeigten Kinderschutzsystems in Form eines Kindersitzes dargestellt.

Gemäß der Zusammenbau-Darstellung in Figur 3 und der ergänzenden Explosionsdarstellung in Figur 4 bildet die Sitzschale 1 des Kinderschutzsystems eine Sitzmulde 10 zur Aufnahme des Gesäßes und der Oberschenkel eines Kindes und ist seitlich durch Beckenstützen 16, 17 für ein in der Sitzmulde 10 sitzendes Kind begrenzt.

An der Sitzschale 1 ist in Lehnenlängsrichtung L unverschieblich jedoch um eine Schwenkachse S klappbar die Rückenstütze 21 angeordnet, die zum rückwärtigen Abstützen des Torsos, insbesondere der Wirbelsäule, eines in der Sitzmulde 10 der Sitzschale 1 sitzenden Kindes ausgebildet und vorgesehen ist.

An der Rückenstütze 21 der Rückenlehne 2 ist in Lehnenlängsrichtung L verschieblich, also höhenverstellbar, die Kopfstütze 22 gelagert, bei der es sich vorliegend um eine aus einer Mehrzahl Bauteilen 6, 7a, 7b, 8 zusammengesetzte Kopfstützenbaugruppe handelt.

Eine erste Baueinheit 6 der Kopfstützenbaugruppe 22 bildet das als Kopfaufnahme dienende, eigentliche Kopfstützenelement mit einer rückwärtigen Stütze 60 und zwei seitlichen Stützen 66, 67 zum Abstützen des Kopfes eines Kindes.

Als weitere Baueinheiten umfasst die Kopfstützenbaugruppe 22 zwei seitliche Stützabschnitte 7a, 7b, von deren Grundkörper 70 im Bereich des jeweiligen oberen Endes eine seitliche Stützwange 76 bzw. 77 absteht, die zur äußeren Unterstützung einer jeweiligen seitlichen Stütze 66, 67 des Kopfstützelementes 6 dient. Vom - in Lehnenlängsrichtung L betrachtet - unteren Ende des jeweiligen seitlichen Stützabschnittes 7a bzw. 7b steht jeweils eine der seitlichen Schulterschutzwangen 26, 27 ab, die durch Verschwenken der beiden seitlichen Stützabschnitte 7a, 7b zueinander um die Lagerachse 24, wie anhand der Figuren 1 und 2 bereits beschrieben, in ihrem Abstand entlang einer Richtung Q quer zur Lehnenlängsrichtung L einstellbar sind. Weiterhin ist an jedem der beiden seitlichen Stützabschnitte 7a, 7b eine der Gurtführungen 28 bzw. 29 ausgebildet.

Die Lagerachse 24 der seitlichen Stützabschnitte 7a, 7b und damit auch der hiervon abstehenden seitlichen Schulterschutzwangen 26, 27 ist an einer weiteren Baueinheit 8 (rückwärtige Abdeckung) der Kopfstützenbaugruppe 22 ausgebildet, deren Grundkörper 80 sich im Wesentlichen entlang der Rückenstütze 21 der Rückenlehne 2 erstreckt. Zur schwenkbaren Lagerung auf jener Lagerachse 24 der rückwärtigen Abdeckung 8 weisen die beiden seitlichen Stützabschnitte 7a, 7b jeweils eine nach innen gerichtete Lasche 74 auf, die mit einer Lageröffnung 74a bzw. 74b zur Anordnung auf der besagten Lagerachse 24 versehen ist. Die Lagerachse 24 und die beiden Lageröffnungen 74a, 74b bilden demnach die Verstelleinrichtung 25 zur Einstellung des Abstandes der beiden Schulterschutzwangen 26, 27 in einer Richtung Q quer zur Lehnenlängsrichtung L durch Verschwenken der Stützabschnitte 7a, 7b um die hierfür vorgesehene Lagerachse 24 im Bereich des oberen Endes der Kopfstützenbaugruppe 22. An jener Lagerachse 24 ist zudem mittels einer Halteöffnung 64 auch das Kopfstützenelement 6 der Kopfstützenbaugruppe 22 eingehängt.

Die Anordnung der Baueinheiten 6, 7a, 7b, 8 der Kopfstützenbaugruppe 22 an der Rückenstütze 21 ist dabei derart, dass sich das Kopfstützenelement 6 - von einem in der Sitzschale 1 sitzenden Kind her gesehen - vor der Rückenstütze 21 erstreckt, während die beiden seitlichen Stützabschnitte 7a, 7b und die rückwärtige Abdeckung 8 sich hinter der Rückenstütze 21 erstrecken und dabei die rückwärtige Abdeckung 8 den Kindersitz nach hinten hin abschließt.

Der erste Einstellmechanismus 20 des Kindersitzes, der zur Einstellung der Kopfstützenhöhe, also der Lage der Kopfstützenbaugruppe 22 bezüglich der Rückenstütze 21 in Lehnenlängsrichtung L dient, umfasst insgesamt vier in Lehnenlängsrichtung L erstreckte Längsführungen 21a, 21b, 21c, 21d an der Rückenstütze 21, von denen jeweils zwei Längsführungen 21a, 21b bzw. 21c, 21d parallel zueinander und nebeneinander verlaufen. Jeder der Längsführungen 21 a, 21 b, 21c, 21d ist jeweils ein Führungselement 22a, 22b, 22c bzw. 22d in Form eines Führungszapfens an der rückwärtigen Abdeckung 8 der Kopfstützenbaugruppe 22 zugeordnet. Hierdurch lässt sich die rückwärtige Abdeckung 8 zusammen mit den über die Lagerachse 24 hieran gelagerten weiteren Baueinheiten 6, 7a, 7b der Kopfstützenbaugruppe 22 in Lehnenlängsrichtung L bezüglich der Rückenstütze 21 verschieben. Über die vorbeschriebenen Längsführungen hinaus können noch weitere, zusätzliche Längsführungen vorgesehen sein, die der Führung der Kopfstützenbaugruppe 22 bezüglich der Rückenstütze 21 entlang einer Lehnenlängsrichtung L dienen; in Figur 3 ist das untere Ende zweier solcher zusätzlicher Längsführungen erkennbar, die sich im Bereich des oberen Endabschnittes der Rückenstütze 21 erstrecken und die überwiegend durch das Kopfstützenelement 6 verdeckt sind.

Zur Kopplung des ersten Einstellmechanismus 20 des Kindersitzes, mit dem die Lage der Kopfstützenbaugruppe 22 bezüglich der Rückenstütze 21 in Lehnenlängsrichtung L einstellbar ist, an den zweiten Einstellmechanismus 25, mit dem der Abstand der beiden seitlichen Schulterschutzwangen 26, 27 (Seitenwangen) quer zur Sitzlängsrichtung L einstellbar ist, dienen als Koppelmechanismus 5 bzw. Koppelgetriebe 50 an der höhenverstellbaren Kopfstützenbaugruppe 22, genauer an den Schulterschutzwangen 26, 27 vorgesehene Führungselemente 56, 57 in Form von Gleitnasen, von denen je eine im Bereich des unteren Endes einer jeden Schulterschutzwange 26, 27 angeordnet ist und die einander zugewandt sind. Jeder dieser beiden Gleitnasen 56, 57 ist an der in den Figuren 3 und 4 nicht sichtbaren Rückseite der Rückenstütze 21 jeweils eine geneigt zur Lehnenlängsrichtung L verlaufende Führungsbahn in Form einer Gleitfläche zugeordnet, über die die beiden Gleitnasen 56, 57 bei einer Einstellung der Lage der Kopfstützenbaugruppe 22 bezüglich der Rückenstütze 21 in Lehnenlängsrichtung L gleiten. Aufgrund des geneigten Verlaufs der den Gleitnasen 56, 57 an der Rückenseite der Rückenstütze 21 zugeordneten Gleitflächen - entsprechend dem geneigten Verlauf der Führungskulissen 51, 52 gemäß den Figuren 1 und 2 - wird bei einer Bewegung der Kopfstützenbaugruppe 22 bezüglich der Rückenstütze 21 in Lehnenlängsrichtung L eine Schwenkbewegung der Schulterschutzwangen 26, 27 um deren Lagerachse 24 hervorgerufen.

Die den Gleitnasen 56, 57 zugeordneten Gleitflächen sind bevorzugt an Führungsschienen ausgebildet sein, die geneigt an der Rückseite der Rückenstütze 21 verlaufen. Sie sind derart geneigt, dass bei einem Anheben der Kopfstützenbaugruppe 22 in Lehnenlängsrichtung L, so dass sich die effektive Gesamtlänge der Rückenlehne des Kindersitzes erhöht, der Abstand zwischen den Schulterschutzwangen 26, 27 quer zur Lehnenlängsrichtung L größer wird. Umgekehrt reduziert sich der Abstand der Schulterschutzwangen 26, 27 quer zur Lehnenlängsrichtung L. wenn die Kopfstützenbaugruppe 22 entlang der Lehnenlängsrichtung L bezüglich der Rückenstütze 21 abgesenkt wird, so dass sich die effektive Länge der gesamten Rückenlehne verringert.

Alternativ zu einfachen Führungsflächen können den Gleitnasen 56, 57 an der Rückseite der Rückenstütze als Führungsbahnen auch eine geeignete geneigte Führungskulisse (ähnlich wie bei Position 51, 52 in den Figuren 1 und 2 erkennbar) bzw. jeweils eine profilierte Führungsschiene zugeordnet sein, in die die jeweilige Gleitnase 56, 57 eingreift.

In einer jeweils eingestellten Position der Kopfstützenbaugruppe 22 bezüglich der Rückenstütze 21 in Lehnenlängsrichtung L lässt sich die Kopfstützenbaugruppe 22 mittels eines einen Rastmechanismus umfassenden Verriegelungsmechanismus 9 verriegeln. Hierzu umfasst der Rastmechanismus eine in Figur 4 erkennbare federbelastete Rastnase 90, die zum Beispiel an der rückwärtigen Abdeckung 8 der Kopfstützenbaugruppe 22 angeordnet ist und der an der in den Figuren 3 und 4 nicht erkennbaren Rückseite der Rückenstütze 21 Formschlusselemente, zum Beispiel in Form einer Längs- bzw. Rastverzahnung, zugeordnet sind, in die die Rastnase 90 in einer jeweiligen Relativposition der Kopfstützenbaugruppe 22 bezüglich der Rückenstütze 21 formschlüssig einrasten kann. Die Kopfstützenbaugruppe 22 ist dann bezüglich der Rückenstütze 21 in einer definierten Längsposition arretiert.

Da die Rastnase 90 mittels eines Federelementes elastisch in Richtung auf den verriegelten Zustand vorgespannt ist, ist die Kopfstützenbaugruppe 22 normalerweise bezüglich der Rückenstütze 21 in ihrer jeweils aktuellen Längsposition arretiert. Zum Entriegeln des Verriegelungsmechanismus 9 in Form eines Rastmechanismus dient ein Entriegelungshebel 91 mit einem Handgriff 92, durch dessen Betätigung die Rastnase 90 außer Eingriff mit der zugeordneten Rastverzahnung an der Rückseite der Rückenstütze 21 bringbar ist, um eine Neueinstellung der Position der Kopfstützenbaugruppe 22 bezüglich der Rückenstütze 21 in Lehnenlängsrichtung L vornehmen zu können. Der Handgriff 92 fällt dabei bevorzugt mit dem in Figur 3 erkennbaren Betätigungsgriff 3 zusammen, der ergriffen wird, um die Kopfstützenbaugruppe 22 in Lehnenlängsrichtung L bezüglich der Rückenstütze 21 zu verstellen.

## Patentansprüche

1. Kinderschutzsystem für Kraftfahrzeuge zur Anordnung an einem Kraftfahrzeugsitz, mit
- einer entlang einer Lehnenlängsrichtung (L) erstreckten Rückenlehne (2),
- einer an einer Sitzschale (1) anzuordnenden Rückenstütze (21) der Rückenlehne (2) zum rückseitigen Abstützen des Torsos eines Kindes,
- einer an der Rückenstütze (21) in Lehnenlängsrichtung (L) beweglich gelagerten Kopfstützenbaugruppe (22) der Rückenlehne (2) zum rückwärtigen und/oder seitlichen Abstützen des Kopfes eines Kindes,
- einem ersten Einstellmechanismus (20) zur Einstellung der Lage der Kopfstützenbaugruppe (22) bezüglich der Rückenstütze (21) in Lehnenlängsrichtung (L),
- zwei seitlichen Schulterschutzwangen (26, 27), die quer zur Lehnenlängsrichtung (L) voneinander beabstandet an je einem seitlichen Stützabschnitt (7a, 7b) der Kopfstützenbaugruppe (22) angeordnet sind, und
- einem zweiten Einstellmechanismus (25) zur Einstellung des Abstandes zwischen den beiden seitlichen Schulterschutzwangen (26, 27) quer zur Lehnenlängsrichtung (L),
**gekennzeichnet durch**
einen Koppelmechanismus (5), mittels dem die beiden Einstellmechanismen (20, 25) derart miteinander gekoppelt sind, dass bei Betätigung eines Einstellmechanismus (20) auch der andere Einstellmechanismus (25) ausgelöst wird, wobei der Abstand zwischen den beiden seitlichen Schulterschutzwangen (26, 27) **durch** Verschwenken der beiden seitlichen Stützabschnitte (7a, 7b) um eine Schwenkachse (24) einstellbar ist.

2. Kinderschutzsystem nach Anspruch 1, **dadurch gekennzeichnet, dass** die beiden Einstellmechanismen (20, 25) derart miteinander gekoppelt sind, dass bei Betätigung des ersten Einstellmechanismus (20) der zweite Einstellmechanismus (25) ausgelöst wird.

3. Kinderschutzsystem nach Anspruch 1 oder 2, **dadurch gekennzeichnet, dass** der Koppelmechanismus (5) ein Koppelgetriebe (50) zur Umsetzung einer Bewegung entlang einer ersten Richtung (L) in eine Bewegung mit einer Komponente (Q) senkrecht zur ersten Richtung (L) aufweist.

4. Kinderschutzsystem nach Anspruch 2 und 3, **dadurch gekennzeichnet, dass** die erste Richtung (L) die Lehnenlängsrichtung ist.

5. Kinderschutzsystem nach Anspruch 3 oder 4, **dadurch gekennzeichnet, dass** das Koppelgetriebe ein Zahngetriebe ist.

6. Kinderschutzsystem nach Anspruch 3 oder 4, **dadurch gekennzeichnet, dass** das Koppelgetriebe ein Schrauben- oder Spindelgetriebe ist.

7. Kinderschutzsystem nach Anspruch 3 oder 4, **dadurch gekennzeichnet, dass** das Koppelgetriebe ein Hebelgetriebe ist.

8. Kinderschutzsystem nach Anspruch 3 oder 4, **dadurch gekennzeichnet, dass** das Koppelgetriebe ein Zugmittelgetriebe ist.

9. Kinderschutzsystem nach Anspruch 3 oder 4, **dadurch gekennzeichnet, dass** das Koppelgetriebe (50) mindestens ein entlang einer Führungsbahn (51, 52) geführtes Führungselement (53, 54, 56, 57) umfasst.

10. Kinderschutzsystem nach einem der Ansprüche 3 bis 9, **dadurch gekennzeichnet, dass** das Koppelgetriebe (50) zur Umsetzung einer Längsbewegung in eine Drehbewegung oder zur Umsetzung einer Drehbewegung in eine Längsbewegung dient.

11. Kinderschutzsystem nach einem der Ansprüche 3 bis 9, **dadurch gekennzeichnet, dass** das Koppelgetriebe (50) zur Umsetzung einer Längsbewegung entlang einer ersten Richtung (L) in eine Längsbewegung entlang einer anderen Richtung (Q) ausgebildet ist.

12. Kinderschutzsystem nach Anspruch 5 und Anspruch 10 oder 11, **dadurch gekennzeichnet, dass** das Koppelgetriebe eine Zahnstange und ein hiermit kämmendes Zahnrad umfasst.

13. Kinderschutzsystem nach Anspruch 6 und Anspruch 10 oder 11, **dadurch gekennzeichnet, dass** das Koppelgetriebe eine Schraube oder Spindel und eine hiermit in Eingriff stehende Mutter umfasst.

14. Kinderschutzsystem nach Anspruch 7 und Anspruch 10 oder 11, **dadurch gekennzeichnet, dass** das Koppelgetriebe eine Kurbel umfasst.

15. Kinderschutzsystem nach Anspruch 8 und Anspruch 10 oder 11, **dadurch gekennzeichnet, dass** das Koppelgetriebe ein Zugmittel und eine hierdurch angetriebene Rolle umfasst.

16. Kinderschutzsystem nach Anspruch 9 und Anspruch 10 oder 11, **dadurch gekennzeichnet, dass** die jeweilige Führungsbahn (51, 52) als Führungskulisse ausgebildet ist, in die ein Führungselement (53, 54) eingreift.

17. Kinderschutzsystem nach Anspruch 9 und Anspruch 10 oder 11, **dadurch gekennzeichnet, dass** die jeweilige Führungsbahn als Führungsfläche ausgebildet ist, auf der ein Führungselement (53, 54) gleitet.

18. Kinderschutzsystem nach einem der vorhergehenden Ansprüche, **dadurch gekennzeichnet, dass** die Rückenstütze (21) in Lehnenlängsrichtung (L) nicht verschieblich an der Sitzschale (1) angeordnet ist.

19. Kinderschutzsystem nach einem der vorhergehenden Ansprüche, **dadurch gekennzeichnet, dass** die Rückenstütze (21) klappbar an der Sitzschale (1) angeordnet ist.

20. Kinderschutzsystem nach einem der vorhergehenden Ansprüche, **dadurch gekennzeichnet, dass** der Abstand der beiden seitlichen Schulterschutzwangen (26, 27) durch Verschwenken der beiden Schulterschutzwangen (26, 27) zueinander um die Schwenkachse (24) einstellbar ist.

21. Kinderschutzsystem nach Anspruch 20, **dadurch gekennzeichnet, dass** die Schwenkachse (24) senkrecht zur Lehnenlängsrichtung (L) verläuft.

22. Kinderschutzsystem nach Anspruch 20 oder 21, **dadurch gekennzeichnet, dass** die Schwenkachse (24) zwischen den beiden seitlichen Schulterschutzwangen (26, 27) an der Kopfstützenbaugruppe (22) angeordnet ist.

23. Kinderschutzsystem nach einem der vorhergehenden Ansprüche, **dadurch gekennzeichnet, dass** ein Betätigungsgriff (3) zur Betätigung des einen Einstellmechanismus (20) vorgesehen ist.

24. Kinderschutzsystem nach Anspruch 23, **dadurch gekennzeichnet, dass** der Betätigungsgriff (3) in einer Griffmulde (30) angeordnet ist.

25. Kinderschutzsystem nach einem der vorhergehenden Ansprüche, **dadurch gekennzeichnet, dass** ein Verriegelungsmechanismus (9) zur Verriegelung einer Einstellung des einen Einstellmechanismus (20) vorgesehen ist.

26. Kinderschutzsystem nach Anspruch 25, **dadurch gekennzeichnet, dass** der Verriegelungsmechanismus (9) einen Rastmechanismus umfasst.

27. Kinderschutzsystem nach Anspruch 25 oder 26, **dadurch gekennzeichnet, dass** der Verriegelungsmechanismus (9) elastisch in Richtung auf den verriegelten Zustand vorgespannt ist.

28. Kinderschutzsystem nach einem der Ansprüche 25 bis 27, **dadurch gekennzeichnet, dass** dem Verriegelungsmechanismus (9) ein Bedienelement (3; 91, 92 ) zum Lösen des Verriegelungsmechanismus zugeordnet ist.

29. Kinderschutzsystem nach Anspruch 23 und 28, **dadurch gekennzeichnet, dass** das Bedienelement durch den Betätigungsgriff (3) gebildet wird.

30. Kinderschutzsystem nach einem der vorhergehenden Ansprüche, **dadurch gekennzeichnet, dass** eine Anzeigeeinrichtung (4) zur Anzeige der Einstellung mindestens eines der Einstellmechanismen (20, 25) vorgesehen ist.

31. Kinderschutzsystem nach Anspruch 30, **dadurch gekennzeichnet, dass** die Anzeigeeinrichtung (4) eine Skala (42) und einen Zeiger (41) umfasst, die an jeweils einem von zwei mittels des Einstellmechanismus (20) zueinander verstellbaren Teilen (21, 22) vorgesehen sind.

32. Kinderschutzsystem nach Anspruch 31, **dadurch gekennzeichnet, dass** der Zeiger (41) durch ein Sichtfenster gebildet wird.

33. Kinderschutzsystem nach einem der vorhergehenden Ansprüche, **dadurch gekennzeichnet, dass** an mindestens einer der seitlichen Schulterschutzwangen (26, 27) der Kopfstützenbaugruppe (22) eine Gurtführung (28, 29) für einen Sicherheitsgurt vorgesehen ist.

34. Kinderschutzsystem nach Anspruch 33, **dadurch gekennzeichnet, dass** die mindestens eine Gurtführung (28, 29) derart an einer seitlichen Schulterschutzwange (26, 27) der Kopfstützenbaugruppe (22) angeordnet ist, dass bei einer Änderung des Abstandes zwischen den beiden seitlichen Schulterschutzwangen (26, 27) quer zur Lehnenlängsrichtung (L) sich gleichzeitig auch die Position der Gurtführung (28, 29) quer zur Lehnenlängsrichtung (L) ändert.

35. Kinderschutzsystem nach Anspruch 34, **dadurch gekennzeichnet, dass** sich die jeweilige Gurtführung (28, 29) zusammen mit der am selben seitlichen Stützabschnitt (7a, 7b) angeordneten Schulterschutzwange (26, 27) bewegt.

36. Kinderschutzsystem nach einem der Ansprüche 33 bis 35, **dadurch gekennzeichnet, dass** die mindestens eine Gurtführung (28, 29) bei einer Änderung der Position der Kopfstützenbaugruppe (22) in Lehnenlängsrichtung (L) bewegt wird.

## Claims

1. A child protection system for motor vehicles for arranging on a motor vehicle seat, with
- a backrest (2) which extends along a backrest longitudinal direction (L),
- a back support (21) of the backrest (2), which back support is to be arranged on a seat shell (1) and is intended for the rear support of a child's torso,
- a head restraint subassembly (22) of the backrest (2), which head restraint subassembly is mounted movably in the backrest longitudinal direction (L) on the back support (21) and is intended for the rear and/or lateral support of a child's head,
- first setting mechanism (20) for setting the position of the head restraint subassembly (22) with respect to the back support (21) in the backrest longitudinal direction (L),
- two lateral shoulder protection cheeks (26, 27) which are arranged spaced apart from each other transversely with respect to the backrest longitudinal direction (L) on a respective lateral supporting section (7a, 7b) of the head restraint subassembly (22), and
- a second setting mechanism (25) for setting the distance between the two lateral shoulder protection cheeks (26, 27) transversely with respect to the backrest longitudinal direction (L),
**characterized by**
a coupling mechanism (5) by means of which the two setting mechanism (20, 25) are coupled to each other in such a manner that, when one setting mechanism (20) is actuated, the other setting mechanism (25) is also triggered, with it being possible for the distance between the two lateral shoulder protection cheeks (26, 27) to be set by pivoting the two lateral supporting sections (7a, 7b) about a pivot axis (24).

2. The child protection system as claimed in claim 1, **characterized in that** the two setting mechanism (20, 25) are coupled to each other in such a manner that, when the first setting mechanism (20) is actuated, the second setting mechanism (25) is triggered.

3. The child protection system as claimed in claim 1 or 2, **characterized in that** the coupling mechanism (5) has a coupling gear (50) for converting a movement along a first direction (L) into a movement with a component (Q) perpendicular to the first direction (L).

4. The child protection system as claimed in claims 2 and 3, **characterized in that** the first direction (L) is the backrest longitudinal direction.

5. The child protection system as claimed in claim 3 or 4, **characterized in that** the coupling gear is a toothed gear.

6. The child protection system as claimed in claim 3 or 4, **characterized in that** the coupling gear is a screw or spindle gear.

7. The child protection system as claimed in claim 3 or 4, **characterized in that** the coupling gear is a lever gear.

8. The child protection system as claimed in claim 3 or 4, **characterized in that** the coupling gear is a traction gear.

9. The child protection system as claimed in claim 3 or 4, **characterized in that** the coupling gear (50) comprises at least one guide element (53, 54, 55, 56) guided along a guide track (51, 52).

10. The child protection system as claimed in one of claims 3 to 9, **characterized in that** the coupling gear (50) is used for converting a longitudinal movement into a rotational movement or for converting a rotational movement into a longitudinal movement.

11. The child protection system as claimed in one of claims 3 to 9, **characterized in that** the coupling gear (50) is designed for converting a longitudinal movement along a first direction (L) into a longitudinal movement along another direction (Q).

12. The child protection system as claimed in claim 5 and claim 10 or 11, **characterized in that** the coupling gear comprises a rack and a pinion meshing therewith.

13. The child protection system as claimed in claim 6 and claim 10 or 11, **characterized in that** the coupling gear comprises a screw or spindle and a nut in engagement therewith.

14. The child protection system as claimed in claim 7 and claim 10 or 11, **characterized in that** the coupling gear comprises a crank.

15. The child protection system as claimed in claim 8 and claim 10 or 11, **characterized in that** the coupling gear comprises a traction mechanism and a pulley driven thereby.

16. The child protection system as claimed in claim 9 and claim 10 or 11, **characterized in that** each guide track (51, 52) is designed as a guide slot in which a guide element (53, 54) engages.

17. The child protection system as claimed in claim 9 and claim 10 or 11, **characterized in that** each guide track is designed as a guide surface on which a guide element (53, 54) slides.

18. The child protection system as claimed in one of the preceding claims, **characterized in that** the back support (21) is arranged on the seat shell (1) in a non-displaceable manner in the backrest longitudinal direction (L).

19. The child protection system as claimed in one of the preceding claims, **characterized in that** the back support (21) is arranged foldably on the seat shell (1).

20. The child protection system as claimed in one of the preceding claims, **characterized in that** the distance between the two lateral shoulder protection cheeks (26, 27) can be set by pivoting the two shoulder protection cheeks (26, 27) with respect to each other about the pivot axis (24).

21. The child protection system as claimed in claim 20, **characterized in that** the pivot axis (24) runs perpendicular to the backrest longitudinal direction (L).

22. The child protection system as claimed in claim 20 or 21, **characterized in that** the pivot axis (24) between the two lateral shoulder protection cheeks (26, 27) is arranged on the head restraint subassembly (22).

23. The child protection system as claimed in one of the preceding claims, **characterized in that in that** an actuating handle (3) is provided for actuating the one setting mechanism (20).

24. The child protection system as claimed in claim 23, **characterized in that** the actuating handle (3) is arranged in a recessed grip (30).

25. The child protection system as claimed in one of the preceding claims, **characterized in that** a locking mechanism (9) for locking a setting of the one setting mechanism (20) is provided.

26. The child protection system as claimed in claim 25, **characterized in that** the locking mechanism (9) comprises a latching mechanism.

27. The child protection system as claimed in claim 25 or 26, **characterized in that** the locking mechanism (9) is prestressed elastically in the direction of the locked state.

28. The child protection system as claimed in one of claims 25 to 27, **characterized in that** the locking mechanism (9) is assigned an operating element (3; 91, 92) for releasing the locking mechanism.

29. The child protection system as claimed in claims 23 and 28, **characterized in that** the operating element is formed by the actuating handle (3).

30. The child protection system as claimed in one of the preceding claims, **characterized in that** a display device (4) is provided for displaying the setting of at least one of the setting mechanism (20, 25).

31. The child protection system as claimed in claim 30, **characterized in that** the display device (4) comprises a scale (42) and a pointer (41) which are each provided on one of two parts (21, 22) which can be adjusted with respect to each other by means of the setting mechanism (20).

32. The child protection system as claimed in claim 31, **characterized in that** the pointer (41) is formed by a viewing window.

33. The child protection system as claimed in one of the preceding claims, **characterized in that** a belt guide (28, 29) for a seatbelt is provided on at least one of the lateral shoulder protection cheeks (26, 27) of the head restraint subassembly (22).

34. The child protection system as claimed in claim 33, **characterized in that** the at least one belt guide (28, 29,) is arranged on a lateral shoulder protection cheek (26, 27) of the head restraint subassembly (22) in such a manner that, in the event of a change in the distance between the two lateral shoulder protection cheeks (26, 27) transversely with respect to the backrest longitudinal direction (L), the position of the belt guide (28, 29) transversely with respect to the backrest longitudinal direction (L) also changes at the same time.

35. The child protection system as claimed in claim 34, **characterized in that** each belt guide (28, 29) is moved together with the shoulder protection cheek (26, 27) arranged on the same lateral supporting section (7a, 7b).

36. The child protection system as claimed in one of claims 33 to 35, **characterized in that** the at least one belt guide (28, 29) is moved in the backrest longitudinal direction (L) in the event of a change in the position of the head restraint subassembly (22).

## Revendications

1. Système de protection d'enfants pour véhicules automobiles destiné à être agencé dans un siège de véhicule automobile, comprenant
- un dossier (2) s'étendant le long d'une direction longitudinale de dossier (L),
- un soutien dorsal (21) du dossier (2) à agencer sur une coque de siège (1) pour le soutien dorsal du torse d'un enfant,
- un groupe structurel formant appui-tête (22) du dossier (2), monté déplaçable sur le soutien dorsal (21) dans la direction longitudinale de dossier (L), pour le soutien postérieur et/ou latéral de la tête d'un enfant,
- un premier mécanisme de réglage (20) pour régler la situation du groupe structurel formant appui-tête (22) par rapport au soutien dorsal (21) dans la direction longitudinale de dossier (L),
- deux joues latérales de protection d'épaule (26, 27), qui sont agencées à distance l'une de l'autre transversalement à la direction longitudinale de dossier (L) sur un tronçon de soutien latéral respectif (7a, 7b) du groupe structurel formant appui-tête (22), et
- un second mécanisme de réglage (25) pour le réglage de la distance entre les deux joues latérales de protection d'épaule (26, 27) transversalement à la direction longitudinale du dossier (L),
**caractérisé par**
un mécanisme de couplage (5), au moyen duquel les deux mécanismes de réglage (20, 25) sont couplés l'un à l'autre de telle façon que lors d'un actionnement d'un mécanisme de réglage (20) l'autre mécanisme de réglage (25) est également déclenché, dans lequel la distance entre les deux joues latérales de protection d'épaule (26, 27) est réglable par pivotement des deux tronçons de soutiens latéraux (7a, 7b) autour d'un axe de pivotement (24).

2. Système de protection d'enfants selon la revendication 1, **caractérisé en ce que** les deux mécanismes de réglage (20, 25) sont couplés l'un à l'autre de telle façon que lors d'un actionnement du premier mécanisme de réglage (20) le second mécanisme de réglage (25) est déclenché.

3. Système de protection d'enfants selon la revendication 1 ou 2, **caractérisé en ce que** le mécanisme de couplage (5) comprend un mécanisme d'accouplement (50) pour la conversion d'un mouvement le long d'une première direction (L) en un mouvement avec une composante (Q) perpendiculaire à la première direction (L).

4. Système de protection d'enfants selon les revendications 2 et 3, **caractérisé en ce que** la première direction (L) est la direction longitudinale de dossier.

5. Système de protection d'enfants selon la revendication 3 ou 4, **caractérisé en ce que** le mécanisme d'accouplement est un mécanisme à engrenages.

6. Système de protection d'enfants selon la revendication 3 ou 4, **caractérisé en ce que** le mécanisme d'accouplement est un mécanisme à vis ou un mécanisme à broche.

7. Système de protection d'enfants selon la revendication 3 ou 4, **caractérisé en ce que** le mécanisme d'accouplement est un mécanisme à levier.

8. Système de protection d'enfants selon la revendication 3 ou 4, **caractérisé en ce que** le mécanisme d'accouplement est un mécanisme à organe de traction.

9. Système de protection d'enfants selon la revendication 3 ou 4, **caractérisé en ce que** le mécanisme d'accouplement (50) comprend au moins un élément de guidage (53, 54, 56, 57) guidé le long d'une voie de guidage (51, 52).

10. Système de protection d'enfants selon l'une des revendications 3 à 9, **caractérisé en ce que** le mécanisme d'accouplement (50) sert à la conversion d'un mouvement longitudinal en un mouvement rotatif ou à la conversion d'un mouvement rotatif en un mouvement longitudinal.

11. Système de protection d'enfants selon l'une des revendications 3 à 9, **caractérisé en ce que** le mécanisme d'accouplement (50) est réalisé pour la conversion d'un mouvement longitudinal le long d'une première direction (L) en un mouvement longitudinal le long d'une autre direction (Q).

12. Système de protection d'enfants selon la revendication 5 et la revendication 10 ou 11, **caractérisé en ce que** le mécanisme d'accouplement comprend une crémaillère et une roue dentée en engrènement avec celle-ci.

13. Système de protection d'enfants selon la revendication 6 et la revendication 10 ou 11, **caractérisé en ce que** le mécanisme d'accouplement comprend une vis ou une broche et un écrou en engagement avec celle-ci.

14. Système de protection d'enfants selon la revendication 7 et la revendication 10 ou 11, **caractérisé en ce que** le mécanisme d'accouplement comprend une bielle.

15. Système de protection d'enfants selon la revendication 8 et la revendication 10 ou 11, **caractérisé en ce que** le mécanisme d'accouplement comprend un organe de traction et un galet entraîné par celui-ci.

16. Système de protection d'enfants selon la revendication 9 et la revendication 10 ou 11, **caractérisé en ce que** la voie de guidage respective (51, 52) est réalisée sous forme de glissière de guidage dans laquelle s'engage un élément de guidage (53, 54).

17. Système de protection d'enfants selon la revendication 9 et la revendication 10 ou 11, **caractérisé en ce que** la voie de guidage respective est réalisée sous forme de surface de guidage sur laquelle coulisse un élément de guidage (53, 54).

18. Système de protection d'enfants selon l'une des revendications précédentes, **caractérisé en ce que** le soutien dorsal (21) est agencé sur la coque de siège (1) sans possibilité de translation en direction longitudinale du dossier (L).

19. Système de protection d'enfants selon l'une des revendications précédentes, **caractérisé en ce que** le soutien dorsal (21) est agencé sur la coque de siège (1) de manière à pouvoir être rabattu.

20. Système de protection d'enfants selon l'une des revendications précédentes, **caractérisé en ce que** la distance des deux joues latérales de protection d'épaule (26, 27) est réglable par pivotement des deux joues de protection d'épaule (26, 27) l'une par rapport à l'autre autour de l'axe de pivotement (24).

21. Système de protection d'enfants selon la revendication 20, **caractérisé en ce que** l'axe de pivotement (24) s'étend perpendiculairement à la direction longitudinale du dossier (L).

22. Système de protection d'enfants selon la revendication 20 ou 21, **caractérisé en ce que** l'axe de pivotement (24) est agencé sur le groupe structurel formant appui-tête (22) entre les deux joues latérales de protection d'épaule (26, 27).

23. Système de protection d'enfants selon l'une des revendications précédentes, **caractérisé en ce qu'**il est prévu une manette d'actionnement (3) pour l'actionnement du mécanisme de réglage (20).

24. Système de protection d'enfants selon la revendication 23, **caractérisé en ce que** la manette d'actionnement (3) est agencée dans un creux de manette (30).

25. Système de protection d'enfants selon l'une des revendications précédentes, **caractérisé en ce qu'**il est prévu un mécanisme de verrouillage (9) pour le verrouillage d'un réglage de l'un des mécanismes de réglage (20).

26. Système de protection d'enfants selon la revendication 25, **caractérisé en ce que** le mécanisme de verrouillage (9) comprend un mécanisme à enclenchement.

27. Système de protection d'enfants selon la revendication 25 ou 26, **caractérisé en ce que** le mécanisme de verrouillage (9) est précontraint élastiquement en direction de l'état verrouillé.

28. Système de protection d'enfants selon l'une des revendications 25 à 27, **caractérisé en ce qu'**un élément de manipulation (3 ; 91, 92) est associé au mécanisme de verrouillage (9) pour libérer le mécanisme de verrouillage.

29. Système de protection d'enfants selon les revendications 23 et 28, **caractérisé en ce que** l'élément de manipulation est formé par la manette d'actionnement (3).

30. Système de protection d'enfants selon l'une des revendications précédentes, **caractérisé en ce** qui est prévu un moyen d'affichage (4) pour l'affichage du réglage de l'un au moins des mécanismes de réglage (20, 25).

31. Système de protection d'enfants selon la revendication 30, **caractérisé en ce que** le moyen d'affichage (4) comprend une échelle (42) et un indicateur (41), lesquels sont prévus respectivement sur une pièce parmi deux pièces (21, 22) déplaçables l'une par rapport à l'autre au moyen du mécanisme de réglage (20).

32. Système de protection d'enfants selon la revendication 31, **caractérisé en ce que** l'indicateur (41) est formé par une fenêtre d'observation.

33. Système de protection d'enfants selon l'une des revendications précédentes, **caractérisé en ce que**, sur l'une au moins des joues latérales de protection d'épaule (26, 27) du groupe structurel formant appui-tête (22) il est prévu un guidage de ceinture (28, 29) pour une ceinture de sécurité.

34. Système de protection d'enfants selon la revendication 33, **caractérisé en ce que** ledit au moins un guidage de ceinture (28, 29) est agencé sur une joues latérales de protection d'épaule (26, 27) du groupe structurel formant appui-tête (22) de telle façon que lors d'une modification de la distance entre les deux joues latérales de protection d'épaule (26, 27) perpendiculairement à la direction longitudinale du dossier (L), la position du guidage de ceinture (28, 29) se modifie également simultanément perpendiculairement à la direction longitudinale du dossier (L).

35. Système de protection d'enfants selon la revendication 34, **caractérisé en ce que** le guidage de ceinture respectif (28, 29) se déplace conjointement avec la joue de protection d'épaule (26, 27) agencée sur le même tronçon de soutien latéral (7a, 7b).

36. Système de protection d'enfants selon l'une des revendications 33 à 35, **caractérisé en ce que**, lors d'une modification de la position du groupe structurel formant appui-tête (22), ledit au moins un guidage de ceinture (28, 29) est déplacé en direction longitudinale du dossier (L).
